Europäisches Patentamt

European Patent Office

Office européen des brevets

(11) Veröffentlichungsnummer: **0 134 878**
**B1**

(19)

(12) # EUROPÄISCHE PATENTSCHRIFT

(45) Veröffentlichungstag der Patentschrift: 04.07.90

(21) Anmeldenummer: 84100800.6

(22) Anmeldetag: 26.01.84

(51) Int. Cl.⁵: **B 01 D 21/04, B 01 D 21/08, B 01 D 21/18**

(54) **Vorrichtung zum Aufbereiten von verbrauchten Emulsionen, Lösungen und Industrieabwässern oder dergleichen.**

(30) Priorität: 21.07.83 DE 3326248

(43) Veröffentlichungstag der Anmeldung:
27.03.85 Patentblatt 85/13

(45) Bekanntmachung des Hinweises auf die
Patenterteilung:
04.07.90 Patentblatt 90/27

(84) Benannte Vertragsstaaten:
AT BE CH FR GB IT LI LU NL SE

(56) Entgegenhaltungen:
DE-A-2 261 556
FR-A-1 280 758
FR-A-2 237 664
GB-A- 29 965
GB-A- 514 143
GB-A-1 070 538
US-A-2 885 080

(73) Patentinhaber: Ralf F. Piepho Abwassertechnik
GmbH
Rittergut 2
D-3015 Wennigsen 5 (DE)

(72) Erfinder: Piepho, Ralf F.
Rittergut 2
D-3015 Wennigsen 5 (DE)

(74) Vertreter: Rücker, Wolfgang, Dipl.-Chem.
Hubertusstrasse 2
D-3000 Hannover 1 (DE)

Courier Press, Leamington Spa, England.

**Beschreibung**

Die Erfindung betrifft eine Vorrichtung zur Aufbereitung von verbrauchten Emulsionen, Lösungen, Industrieabwässern oder dergleichen mit Reaktions- und Absetzbehältern und Einrichtungen zum Austragen des Sediments.

Es ist aus der DE—B—14 59 515 eine Ausführung bekannt, mit der Emulsionen, Lösungen und Industrieabwässer aufbereitet werden können, die jedoch aufgrund ihrer Ausgestaltung und ihrer Konstruktion kostenaufwendig ist und in der Gesamtleistung klein bleibt.

Es ist auch bekannt, bei solchen Anlagen wenigstens zwei unabhängig voneinander betriebbare Reaktionskammern vorzusehen, die wechselweise arbeiten oder gleichzeitig und in denen die aufzubereitende Flüssigkeit mit dem chemischen Mittel zur Spaltung der Emulsion beispielsweise und zur Bindung der koagulierten Teilchen mit der Flüssigkeit in Berührung gebracht wird, wobei ein Bandfilter unter den Reaktionskammern hindurchführend vorgesehen ist, das über das hintere Ende der Vorrichtung hinausragt. Der hinausragende Teil ist dabei schwenkbar ausgebildet und mit Preßwalzen versehen, die eine weitgehende Entwässerung des auf dem Bandfilter liegenden Niederschlages oder Sediments gestatten (AT—B—345 196).

Diese Vorrichtungen oder Anlagen, so wirkungsvoll sie in ihrer Art auch sind, jaben jedoch auch Nachteile. Ein besonderer Nachteil ist beispielsweise der, daß ein Bandfilter angeordnet werden muß, was die Vorrichtung teurer und auch komplizierter macht, denn der Austritt der Flüssigkeit mit dem darin suspendierten Sediment muß auf die Bewegung, auf das Bandfilter abgestimmt werden. Andererseits ist zusätzliche Energie erforderlich, zusätzliche Antriebseinrichtungen und ein Trägerband für das Bandfilter. Durch die Bereitstellung eines Filterstoffes, der von einer Rolle endlos abgezogen wird, ergeben sich zusätzliche Kosten.

Ein weiterer Nachteil ist der, daß die Flüssigkeit, d. h. das Wasser, in dem der Niederschlag enthalten ist, zusammen mit dem Niederschlag auf das Bandfilter abgegeben wird, so daß eine große Flüssigkeitsmenge bewähltigt werden muß und sich die Filtrationsgeschwindigkeit durch den Niederschlag ändert, wodurch der Durchgang des großen Wasservolumens durch das Bandfilter oft unvorteilhaft verlängert wird, weil bereits die ersten Niederschläge oder Flocken die Poren des Bandfilters zuzusetzen beginnen.

Aus der FR—A—2 237 664 ist bekannt, daß in einem wannenförmigen Sammelbehälter eine Vorfiltration der aufzubereitenden Lösung vorgenommen wird. Ein Senkkasten mit einer eingebauten Siebplatte taucht so in die Lösung ein, daß nach oben abgesaugt werden kann. Größere Partikel erreichen daher garnicht erst diese Vorfilteranlage, sondern können sich gleich absetzen. Schwierigkeiten bereiten aber auch hier die Teilchen -wieder bishin zur Verstopfung-, die zwar angesaugt werden, aber das Filter nicht passieren können. Abhilfe soll hier eine spezielle Ausformung des Siebes verschaffen: trapezartig verspannte Drähte sollen die relativ größeren Teilchen schon an der "Vorderfront" abfangen, da die schmalere Trapezbasis zum Filtrat hingewendet ist. Da aber auch nach dieser Vorrichtung ein vollständiges Zusetzen des Siebes nicht zu verhindern ist, muß noch ein umlaufendes Band so in die Wanne eingebaut sein, daß sich mit diesem Band festverbundende und daraus hervorstehende Elemente so dicht von unten an die Siebplatte heranführen lassen, daß sie den anfallenden Filterkuchen mechanisch beseitigen können. Dadurch gelangen nicht abgewiesene, sondern nur weiterzerkleinerte Teilchen nach dieser aufwendigen, aber doch nur als erste Stufe aufzufassende Filtration weiter in eine Vorrichtung, in der sie entgültig durch die Trommelfilterung getrennt werden kann, mit den beschriebenen Nachteilen.

Bei der GB—A—1 070 538 handelt es sich ebenfalls um eine Ausführung, die erheblich aufwendig ist, da sie komplizierte störanfällige Einrichtungen (kettenartige endlose Förderbänder für Filterbandmaterial) umfaßt, welches nach Passieren eines Siebbandes von einer zusätzlichen Fördereinrichtung gestützt werden muß. Diese Ausgestaltung ist störanfällig und kostspielig im Betrieb und in der Unterhaltung.

Es ist Aufgabe der vorliegenden Erfindung, eine Vorrichtung der eingangs beschriebenen Art vorzuschlagen, die einfacher in ihrer Ausgestaltung ist, eine leichte Trennung des Sediments von der Flüssigkeit gestattet, eine einfache Filtervorrichtung besitzt und deren Reaktionskammer, also der Raum, in dem die zu behandelnde Flüssigkeit mit dem chemischen Trennmittel zusammengebracht wird, den Gegebenheiten bzw. Arten der Flüssigkeit durch Änderung des Mischvorganges angepaßt werden kann und dadurch die gesamte Vorrichtung wesentlich vielseitiger und flexibler einsetzbar ist.

Gelöst wird diese Aufgabe nun dadurch, daß neben den Reaktionsbehältern ein Absetzbehälter vorgesehen ist, in welchen ein endlos umlaufendes Kratzband die sich sedimentierende Ausflokkung über eine schräge Fläche einer Auslaßöffnung zuführt, unter der ein Behälter angeordnet ist, in dem sich das Sediment ansammelt.

Das Kratzband ist vorzugsweise ein aus mehrfach U-förmig umgebogenen schmalen Blechstreifen gebildetes Band, wobei die Blechstreifen jeweils untereinander über stabförmige Gelenke schwenkbar miteinander verbunden sind. Da dieses Kratzband mit seiner Fläche, also mit den schmalen Kanten der Blechstreifen, auf dem Boden und der schrägen Wandfläche des Absetzbehälters aufliegt, bilden sich kleine mehr oder weniger rechteckige Vertiefungen, in die die Ausflockung hineinsedimentiert. Da das Kratzband kontinuierlich und relativ langsam umläuft, entsteht quasi ein "beweglicher Boden", durch den das Sediment zum Auslaß befördert wird.

Das Kratzband gleitet auf den Wandflächen des Absetzbehälters langsam entlang und nimmt dabei das Sediment mit. Am oberen Ende der schrägen Wandfläche oberhalb der Wasseroberfläche, über die das Kratzband hinausläuft, gibt es dann das Sediment auf eine andere stark geneigte Rutsche ab, über die das Sediment schließlich in ein Auffanggerät fällt. Das Auffanggefäß ist vorzugsweise ein Behälter aus Kunststoff auf einem Rollengestell, so daß es leicht verfahrbar ist und mit einem Material gefüllt, das eine große Oberfläche aufweist, beispielsweise mit Holzwolle, Stroh oder dergleichen.

Das Sediment aus dem Absetzbehälter der Vorrichtung fällt also noch mit einem bestimmten aber geringen Wassergehalt in den Behälter und bleibt an den Halmen oder Spänen haften, während das Wasser aufgenommen wird oder sich unten im Behälter sammelt und aus diesem auch, falls erforderlich, abgeleitet werden kann.

Das Kratzband ist ein endloses Band und wird über drei Rollen eines Tragrahmens geführt, von denen eine Rolle angetrieben ist, so daß das gesamte Kratzband in Bewegung gesetzt werden kann. Der Rahmen selbst ist unabhängig von der eigentlichen Vorrichtung in den Absetzbehälter einsetzbar und herausnehmbar, so daß auch Reparaturen, Wartungen und sonstiges leicht daran durchführbar sind.

Es sind Ausführungen bekannt, die zwei Reaktionskammern besitzen und auch zwei Mischturbinen. Diese sollen kurz beschrieben werden, bilden aber keinen Teil der Erfindung, tragen aber zum Verständnis der Erfindung bei.

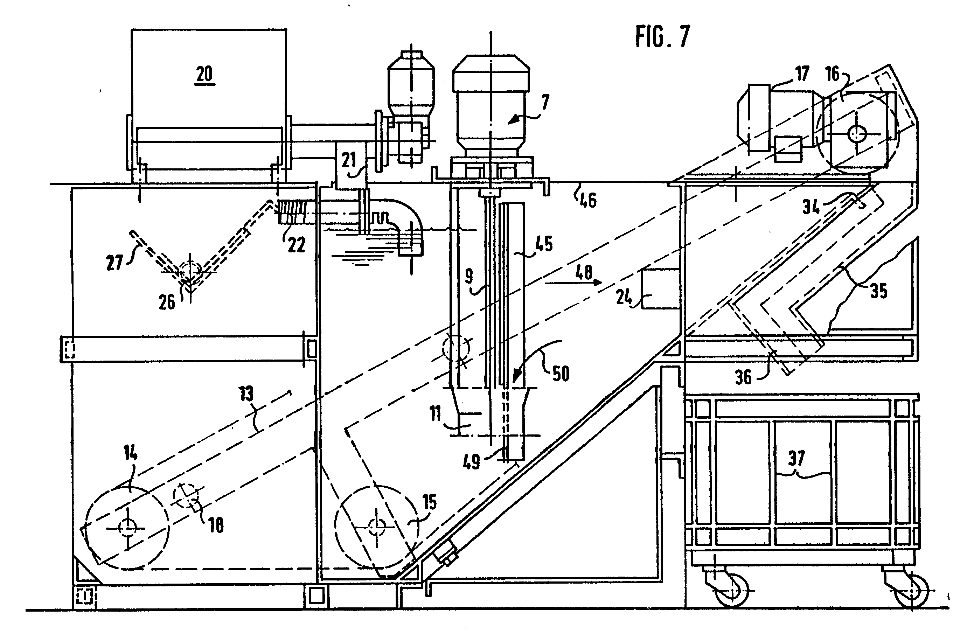

Die Erfindung wird im Zusammenhang mit Fig. 7 erläutert, die ein Ausführungsbeispiel zeigt.

Die Reaktionsbehälter, die neben dem Absetzbehälter angeordnet sind und mit diesem über eine Öffnung im oberen Bereich des Flüssigkeitsstandes verbunden sind, enthalten zwei durch Elektromotoren angetriebene Mischturbinen. Die beiden Reaktionsbehälter sind durch eine Trennwand voneinander getrennt. Die Trennwand enthält einen spalt, der vom unteren Rand der Trennwand und der Bodenplatte gebildet wird.

Die zu reinigende oder zu behandelnde Flüssigkeit fließt in die eine Reaktionskammer ein, strömt dann unter der Trennwand durch den Spalt hindurch in die zweite Reaktionskammer und durch die in dieser gebildeten Öffnung in den daneben befindlichen Absetzbehälter. Oberhalb der ersten Reaktionskammer ist eine Dosiereinrichtung angeordnet, über die das chemische Reaktionsmittel zur Abscheidung der Schadstoffe enthalten ist und die das Mittel in entsprechender Konzentration in die Reaktionskammer dosiert.

Gemäß dem Erfindungsgedanken wird die Trennwand zwischen den beiden Behältern so ausgebildet, daß sie in ihrem unteren Bereich einen Schlitz aufweist, der in seiner Kontur einer Mischturbine entspricht, so daß die Mischturbine senkrecht zur Ebene der Trennwand verfahrbar ist und somit in den Schlitz der Trennwand ein- und ausfahrbar ist. In diesen Schlitz ist die Düse der Mischturbine so weit einfahrbar, bis die Welle nahezu auf der einen Seite der Trennwand aufliegt. Dadurch wird ein Teil der Düse des Propellers der Mischturbine in die benachbarte Reaktionskammer eingeschoben und saugt aus dieser Flüssigkeit an, um sie erneut in die erste Reaktionskammer zurückzubefördern. Dies geschieht dadurch, daß der Antrieb mitsamt der Mischturbine am oberen Rand der Reaktionskammer in Längsrichtung derselben verschiebbar oder verfahrbar angeordnet ist.

Durch Verschieben der Mischturbine können unterschiedliche Mischcharakteristiken und damit Turbulenzen in dem Reaktionsbehälter erzeugt werden, was für die Behandlung bestimmter Flüssigkeiten, Emulsionen oder dergleichen von Vorteil ist. Außerdem wird dadurch oft eine Mischturbine samt Antrieb eingespart.

Der Absetzbehälter ist schließlich an seinem der Verbindungsöffnung mit den Reaktionsbehältern gegenüberliegenden Behältern mit einer Ablaufvorrichtung für die im wesentlichen sedimentfreie klare Flüssigkeit, die in den allermeisten Fällen natürlich Wasser ist, versehen. Diese Ablaufvorrichtung besteht aus einer trogartigen zwischen den Wänden des Behälters angeordneten Rinne, über deren Boden das Auslaßrohr liegt und zur Außenseite des Behälters führt. Die Rinne, die nur oben offen ist, ist so angeordnet, daß ihre Ränder etwa in der Höhe des Flüssigkeitsspiegels in der Absetzkammer liegen. Die Flüssigkeit, d. h. das Wasser, strömt also über die Ränder hinweg in den Trog und dann durch die Ablaufvorrichtung aus dem Behälter hinaus. Diese Anordnung ist deshalb so getroffen, daß möglichst reines sedimentfreies Wasser die Vorrichtung verläßt.

Um nun auch noch restliche Flocken aus dem austretenden Wasser auszusondern, steht unter der Auslaufeinrichtung ein fahrbarer Behälter mit einem Filterstoff ähnlich dem oben beschriebenen, durch den das austretende Wasser hindurchfließt, kleine Restflocken von dem Filterstoff aber festgehalten werden. Dieser Filterstoff kann ebenfalls Holzwolle, Stroh oder dergleichen Gut sein, das eine große Oberfläche bildet. Der das Filtermaterial enthaltende Behälter ist wieder auf einem geschlossenen das Wasser sammelnden Behälter angeordnet, der mit einem Auslaßstutzen versehen ist, über den schließlich das gereinigte Wasser die Vorrichtung verläßt. Auch diese Filtereinrichtung kann fahrbar ausgebildet sein.

Die Erfindung wird nun anhand der Figur 7, die ein Ausführungsbeispiel zeigt, näher erläutert:

Fig. 1 zeigt eine Seitenansicht, teilweise im Schnitt, einer Vorrichtung von der Reaktionsbehälterseite aus gesehen,

Fig. 2 eine ähnliche Ansicht wie die der Fig. 1, jedoch von der Absetzbehälterseite aus gesehen,

Fig. 3 eine Draufsicht auf die Vorrichtung nach Fig. 1 und 2,

Fig. 4 eine Ansicht auf das Ende der Vorrichtung, an dem das Sediment die Vorrichtung verläßt,

Fig. 5 eine Endansicht, an der das gereinigte Wasser die Vorrichtung verläßt,

Fig. 6 eine Draufsicht auf ein Teil des Kratzbandes und

Fig. 7 eine Ansicht ähnlich der der Fig. 1, jedoch erfindungsgemäß mit nur einer Mischturbine und einer mit einem Schlitz versehenen Trennwand.

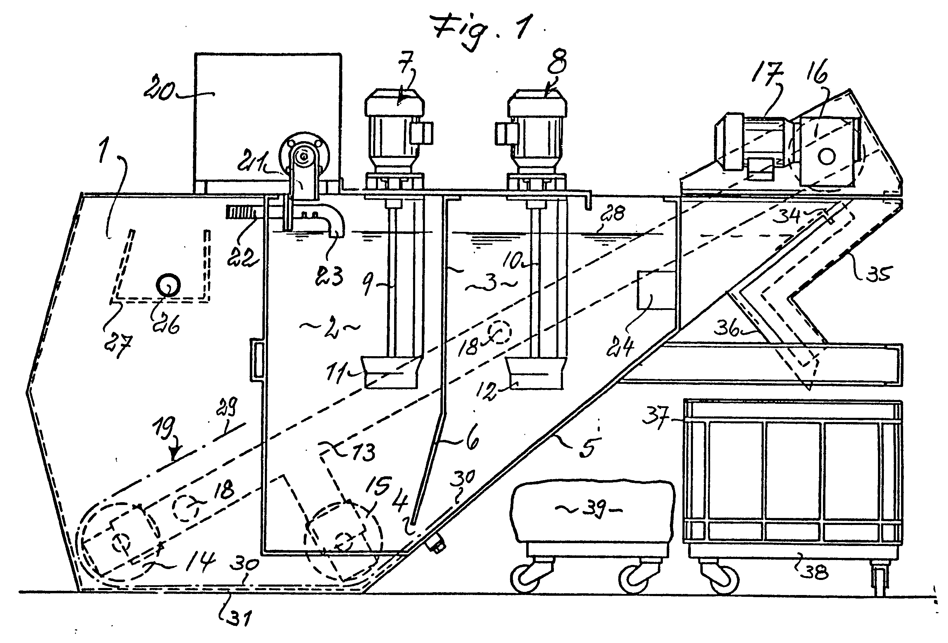

Die in Fig. 1 in der Seitenansicht und teilweise im Schnitt dargestellte Vorrichtung umfaßt drei Behälter, und zwar erstens den Absetzbehälter 1 und die beiden Reaktionsbehälter 2 und 3, die untereinander über den Schlitz 4 unter einer Trennwand 6 in Verbindung stehen. Diese Behälter haben längliche Gestalt und einen schräg verlaufenden Boden bei 5. Die Behälter sind aus Blech geschweißt und mit korrosionsschützender Beschichtungen versehen. In den beiden Reaktionsbehältern 2 und 3 sind Mischturbinen 7 und 8 angeordnet, die über Wellen 9 und 10 Propeller antrieben, die in Düsen 11 und 12 arbeiten.

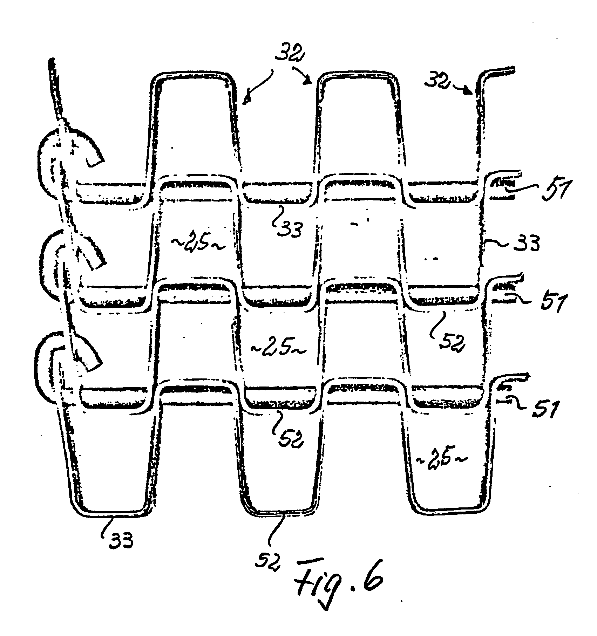

In dem Absetzbehälter 1 ist eine Vorrichtung angeordnet, die aus einem Traggestell 13 mit drei Rollen 14, 15 und 16 besteht, wobei die Rolle 16 durch einen Getriebemotor 17 in Umdrehungen versetzt wird. Die Rollen haben walzenartige Gestalt und sind mit ihren beiden gegenüberliegenden Enden in den rahmenartigen Teilen 13, die über Abstandshalter usw. in bestimmtem parallelen Abstand fest miteinander verbunden sind, gehalten. Die Kreise 18 deuten diese Abstandshalter an. Über die Rollen 14, 15 und 16 verläuft ein Kratzband 19, von welchem ein Teil in Fig. 6 in der Draufsicht gezeigt ist.

Oberhalb des Absetzbehälters ist ein Vorratsbehälter 20 für Reaktionstrennmittel angeordnet, das über eine Dosiereinrichtung innerhalb des Behälters dem Reaktionsbehälter 2 über den Auslaß 21 mehr oder weniger kontinuierlich zugeteilt werden kann.

Das mit dem Bezugszeichen 22 bezeichnete Rohr dient der Zuführung des zu reinigenden Abwassers oder der Emulsion oder derbleichen, die aus dem Auslaß 23 in den Reaktionsbehälter 2 und durch den Spalt 4 in den Reaktionsbehälter 3 einströmt. Über die viereckige Öffnung 24 strömt das mit dem Reaktionstrennmittel durch die Mischturbinen 7, 8 innig vermischte Abwasser in den Absetzbehälter 1, in welchem die ausgeflockten oder koagulierten Verunreinigungen des Wassers sedimentieren und sich in den Zellen 25 (Fig. 6) absetzen. Im Absetzbehälter 1 liegt das Auslaßrohr für das geklärte Wasser, wie bei 26 dargestellt, das in den Absetzbehälter hineinführt, beispielsweise als geschlitztes oder perforiertes Rohr, selbst aber in einer rechteckigen oder dreieckigen Rinne 27, so daß das Abwasser, wie der Flüssigkeitspegel bei 28 in dem Reaktionsbehälter 3 und 2 zeigt, in der Höhe der oberen Kanten der Rinne 27 verläuft. Auf diese Weise wird in jedem Falle möglichst reines, geklärtes oder gereinigtes Abwasser aus der Vorrichtung abgeleitet.

Das Besondere an dieser Vorrichtung ist nun die Anordnung des Kratzbandes innerhalb des Absetzbehälters 1 und die weitere Verarbeitung des Sediments. Durch die Strömung des Abwassers durch die Reaktionsbehälter gelangen die sich bildenden Flocken aufgrund der Zugabe des Reaktionstrennmittels aus dem Reaktionsbehälter 2 durch den Spalt 4 in den Reaktionsbehälter 3, in dem eine Art Nachreaktion stattfindet, um schließlich durch die Öffnung 24 in den Absetzbehälter einzuströmen, wo sich die Flüssigkeit beruhigt und das darin dispergierte Material sedimentiert.

Es fällt dabei durch das obere Trum des Kratzbandes 29 hindurch und sammelt sich in den Zellen 25 des unteren Trums 30, das sowohl auf der kurzen horizontalen Bodenwand 31 des Absetzbehälters als auch auf der schrägen Wand 5 desselben aufliegt, um bis zur oberen Rolle 16 zu laufen. Das Kratzband bildet also praktisch einen beweglichen Boden. Da das Kratzband eine relative Höhe besitzt, weil seine Glieder aneinandergereihte U-förmige Umbiegungen aus Blechstreifen 33 sind, kann sich das Sediment wirkungsvoll darin ansammeln, ohne gepreßt zu werden, und die Bewegung des Kratzbandes nimmt das Sediment mit bis zu der oberen Kante 34 der Wand 5, über die das Kratzband bis zur Rolle 16 hinausläuft. An dieser Stelle fällt das in den Zellen 25 des Kratzbandes locker liegende Sediment herunter auf die schräge Wand 35 einer Rutsche, von der es schließlich über eine weitere schräge Wand 36 in einen Behälter 37 fällt, der mit einem Filter oder Auffangmaterial in Form von Holzwolle oder Stroh gefüllt ist.

Das relativ trockene Sediment befreit sich in diesem Behälter von dem noch mitgeführten Wasser, indem dieses von dem Auffangmaterial, wie Stroh oder Holzwolle, aufgesaugt wird, oder das überflüssige Wasser läuft durch den perforierten Boden hindurch in geeignete Auffangvorrichtungen ab. Der Behälter 37 steht vorzugsweise auf einem Rollengestell 38. Dabei kann die Ausgestaltung so getroffen sein, daß der Behälter 37, der vorzugsweise aus Kunststoff gespritzt ist, gar keinen Boden enthält, sondern der Boden von dem Rollengestell 38 gebildet wird. Dieser Boden ist aber dann perforiert oder mit Durchlässen versehen, damit überschüssiges Wasser abfließen kann.

Wenn die Aufnahmekapazität des Filters oder Aufnahmemittels in dem Behälter 37, beispielsweise die der Holzwolle, erschöpft ist, wird der Behälter 37 abgezogen, so daß ein Paket 39 auf dem Rollengestell verbleibt, das das schlammförmige Sediment und das Sorptions- oder Filtermaterial, wie Holzwolle, trägt. Dieses Material wird dan deponiert.

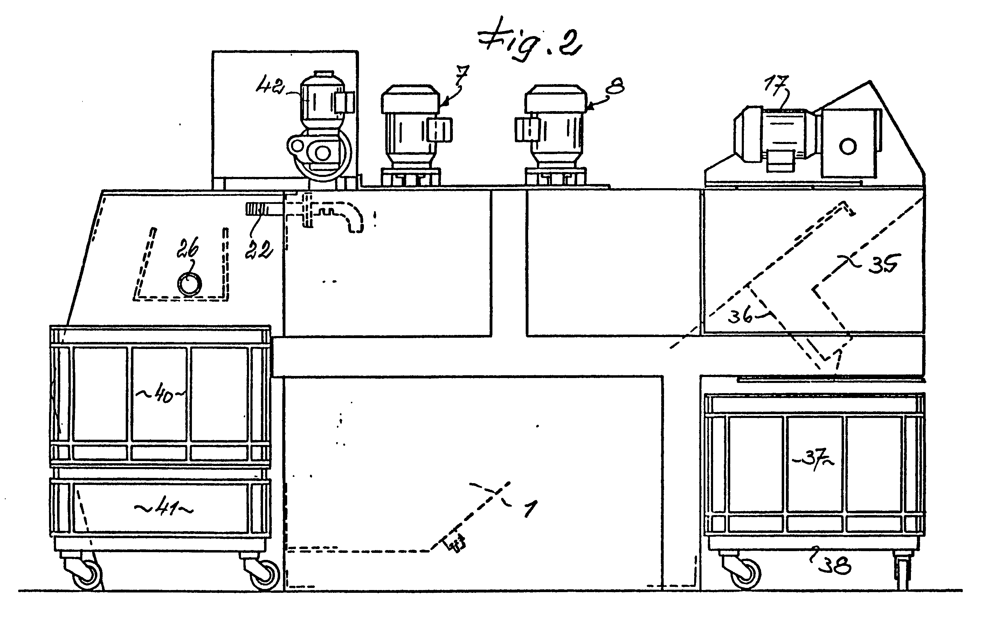

Das geklärte Wasser fließt ebenfalls, wie aus Fig. 2 ersichtlich, in einen Behälter 40, der wiederum mit einem Auffang-, Sorptions- oder Filtermaterial in Form von Holzwolle oder Stroh gefüllt ist.

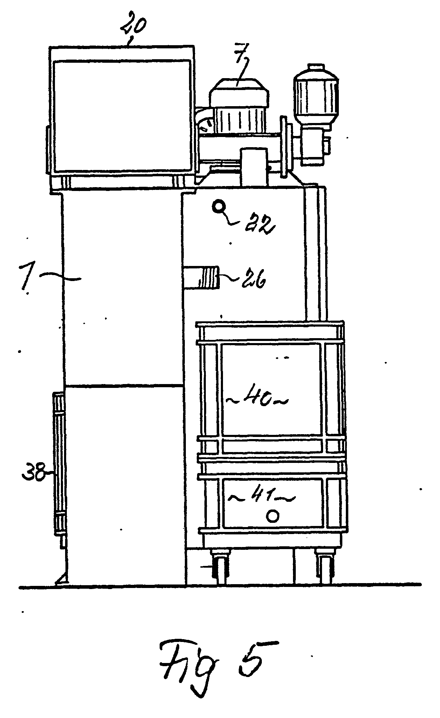

Auf diese Weise wird auch der geringste Rest an Schad- oder Feststoffen in dem gereinigten Wasser beseitigt. Der untere Teil des Behälters 41 ist reines Sammelbecken für Wasser und ist mit einem Auslaß versehen, an dem beispielsweise eine Schlauchleitung angeschlossen werden kann, siehe Figur 5.

In Fig. 2 ist noch zu erkennen die Dosiereinrichtung 42.

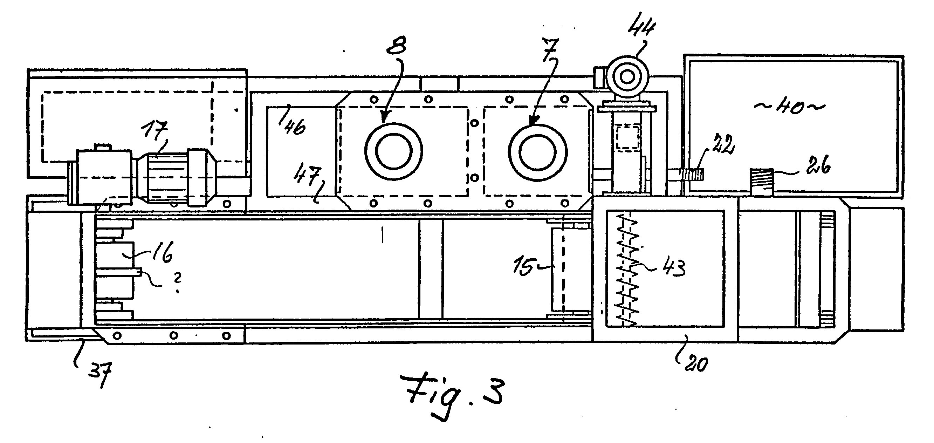

Als weitere Besonderheit in Fig. 3 ist der Auslauf des Wassers 26, das Zuführrohr 22 für das zu reinigende Abwasser und die Dosierschnecke 43 in dem Vorratsbehälter 20 für das Reaktionstrennmittel zu erkennen, ebenso die Rolle 16, über die das Kratzband läuft mit dem Getriebemotor 17.

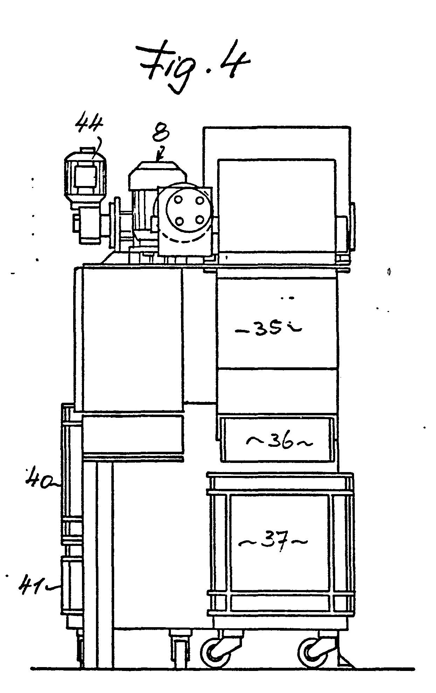

In Fig. 4 ist nun noch eine Stirnseite der Vorrichtung dargestellt, und zwar auf der Seite, an der das schlammförmige Sediment die Vorrichtung verläßt. Das Bezugszeichen 44 bezeichnet den Antriebsmotor nebst Getriebe für die Dosierschnecke 43 der Dosiervorrichtung für das Reaktionstrennmittel.

In Fig. 7 ist eine erfindungsgemäße Abwandlung der Vorrichtung dargestellt. Die Trennwand 6 zwischen den beiden Reaktionsbehältern 2 und 3 ist in der Ausführungsform nach Fig. 1 bis 5 fest angeordnet. Eine Verbindung zwischen den beiden Behältern besteht nur über den Spalt 4, und jeder Behälter besitzt eine Mischturbine 7 bzw. 8. Für manche Zwecke ist es vorteilhaft, ein anderes Mischverfahren oder eine andere Mischcharakteristik zu erzeugen. Aus diesem Grund ist in der Abwandlung nach Fig. 7 die Trennwand 6 durch eine modifizierte Trennwand 45, die zwar auch ortsfest zwischen den Seitenwänden der Behälter befestigt ist, die aber in ihrem unteren Teil einen Schlitz aufweist, der der Kontur der Düse 11 der Mischturbine 7 entspricht. Die Mischturbine 7 nun wiederum ist auf den oberen Rändern 46 und 47 (Fig. 3) verschieblich oder verfahrbar angeordnet. Dadurch kann die Mischturbine bzw. ihr Propeller, der in der Düse 11 arbeitet, weiter nach links von der Trennwand 45 weggeführt werden, so daß die Mischturbulenzen im wesentlichen nur in der linken Hälfte des Reaktionsbehälters zur Entfaltung kommen und aus der rechten Hälfte 45 nur wenig Flüssigkeit angesaugt wird. Wird aber die Mischturbine 7 in Richtung des Pfeiles 48 nach rechts verfahren, beispielsweise in die Stellung, die in Fig. 7 dargestellt ist, so daß ihre Welle 9 dicht vor der Oberfläche der Trennwand 45 liegt, so saugt die Düse 11, die durch den Ausschnitt im unteren Teil der Trennwand bei 49 vorhanden ist, auch Flüssigkeit aus der rechten Hälfte des Reaktionsbehälters an, so daß diese in Richtung des Pfeiles 50 in die Mischturbine einströmt.

Durch das Verschieben der Mischturbine in Verbindung mit der zusammenwirkenden Wand mit Ausschnitt kann also ein bestimmtes Strömungsmuster, also Turbulenzmuster, erzeugt werden, was in manchen Fällen, d. h. bei manchen zu reinigenden Flüssigkeiten, eine bessere Wirkung oder Auswirkung des Reaktionstrennmittels und damit eine bessere Koagulation oder Flockenbildung bewirkt.

Die sonstige in Fig. 7 dargestellte Vorrichtung entspricht bis auf wenige konstruktionsbedingte Änderungen der Vorrichtung nach Fig. 1 bis 5.

Das Zellenband, von welchem ein Ausschnitt in Fig. 6 dargestellt ist, ist aus Blechstreifen durch aufeinanderfolgende U-förmige Umbiegungen gebildet, und die einzelnen Blechstreifen sind durch Stäbe 51 miteinander verschwenkbar verbunden, so daß die einzelnen Glieder, die um einen geringen Betrag ineinandergreifen, gegeneinanderschwenken und sich daher auch dem Boden der Vorrichtung willig anpassen.

Die Höhe eines solchen Metallstreifens liegt zwischen etwa 15 bis 20 mm, vorzugsweise jedoch bei etwa 15 mm, so daß durch die Bewegung des Kratzbandes durch die Vorrichtung in der oben beschriebenen Art eine Verwirbelung und Aufwirbelung des Sediments oder Wassers nicht eintritt.

In den quer zur Vorrichtung verlaufenden Stegen der Glieder, die in Fig. 6 das Bezugszeichen 52 haben, können kleine Bohrungen enthalten sein, durch die der Abfluß des Wassers bei der Bewegung des Kratzbandes durch den Absetzbehälter erleichtert wird. Diese Bohrungen werden durch die Stäbe 51 etwas abgedeckt. Hergestellt ist dieses Kratzband aus einem nicht korrodierenden Material, beispielsweise aus kräftigem Zinkblech. Die Geschwindigkeit des Kratzbandes ist stufenlos regelbar.

Da sich auf dem Boden der Vorrichtung Sediment ansammelt und ein Zwangskontakt zwischen der Bodenoberfläche und den Unterseiten der Glieder des Kratzbandes nicht vorhanden ist, gelangt also immer etwas Sediment unter die Glieder des Kratzbandes, so daß die Oberfläche des Bodens des Absetzbehälters quasi mit einer Schmierschicht überzogen ist, so daß auch ein Verschleiß durch die Bewegung des Kratzbandes nicht eintritt.

Es sei nochmals hervorgehoben, daß in der Ausgestaltung nach Fig. 7 nur eine Mischturbine vorhanden ist, die aber verschieblich angeordnet ist.

**Patentansprüche**

1. Vorrichtung zur Aufbereitung von verbrauchten Emulsionen, Lösungen, Industrieabwässern oder dergleichen mit Reaktionsbehältern und Absetzbehältern mit einem endlos umlaufenden Kratzband, das die sich sedimentierenden Ausflockungen über eine schräge Fläche einer Auslaßöffnung zuführt, und mit Einrichtungen zum Aufnehmen des Sedimentes, dadurch gekennzeichnet, daß in dem Reaktionsbehälter (1) eine Trennwand (45) angeordnet ist, die mit einem vertikalen Schlitz (49) versehen ist, der in seiner Kontur einer Mischturbine (7) entspricht und daß die Mischturbine (7) senkrecht zur Ebene der Trennwand verfahrbar ist, und somit in den Schlitz (49) der Trennwand (45) ein- und ausfahrbar ist.

2. Vorrichtung nach Anspruch 1, dadurch gekennzeichnet, daß das Kratzband aus mehrfach U-förmig (32) umgebogenen schmalen Blechstreifen gebildet ist, die eine Höhe von 15 bis 20 mm aufweisen und über Stäbe (51) schwenkbar miteinander verbunden sind und das Kratzband eine solche Breite hat, daß es den gesamten Boden des Absetzbehälters von Seitenwand zu Seitenwand abdeckt.

3. Vorrichtung nach Anspruch 1 und 2, dadurch gekennzeichnet, daß die Umlaufgeschwindigkeit des Kratzbandes stufenlos regelbar ist und das Kratzband auf Rollen (14, 15 und 16) umläuft, die in einem herausnehmbaren Traggestell (13) gelagert sind.

4. Vorrichtung nach Anspruch 1 bis 3, dadurch gekennzeichnet, daß die Rollen des Gestells (13) so angeordnet sind, daß das Kratzband (19) aus der Flüssigkeit des Absetzbehälters hinausläuft und über eine Abwurfkante (34) hinaus an der das in den Zellen (25) des Kratzbandes enthaltene Sediment heraus und auf eine schräge Wand (35) fällt, von dieser wiederum auf eine schräge Wand (36) und schließlich in den Behälter (37).

5. Vorrichtung nach Anspruch 1 bis 4, dadurch gekennzeichnet, daß der Auffangbehälter für das schlammartige Sediment ein Kunststoffbehälter (37) ist, der selber keinen Boden besitzt, der aber auf einem Rollengestell (38) steht, welches einen perforierten oder wasserdurchlässigen Boden besitzt.

6. Vorrichtung nach Anspruch 5, dadurch gekennzeichnet, daß das Auffangmaterial (39) in Form von Holzwolle, Stroh oder dergleichen ballenförmig auf dem Boden des Rollengestells (38) liegt und der Kunststoffbehälter (37) von diesem Ballen abziehbar ist.

7. Vorrichtung nach Anspruch 5 und 6, dadurch gekennzeichnet, daß der Auslauf des gereinigten Wassers in einen Behälter (40) erfolgt, der einen perforierten oder durchbrochenen Boden aufweist und mit einem Filterstoff, wie Stroh oder Holzwolle, in Ballenform gehüllt ist und dieser Behälter oberhalb eines Flüssigkeitssammelbehälters (41) steht, der seinerseits wieder auf einem Rollengestell angeordnet ist und mit einem Flüssigkeitsauslaufanschluß versehen ist.

## Revendications

1. Dispositif pour le traitement d'émulsions, solutions, eaux résiduaires industrielles usées, ou analogues, avec des cuves de réaction et des cuves de décantation, avec une bande à raclettes sans fin, qui amène les produits de floculation déposés par l'intermédiaire d'une surface inclinée d'un orifice de décharge, et comportant des équipements permettant d'absorber le sédiment, caractérisé en ce que, dans la cuve de réaction (1), est disposée une cloison séparatrice (45), qui est pourvue d'une fente de passage verticale (49), dont le contour correspond à une turbine mélangeuse (7), et en ce que la turbine mélangeuse (7) peut être déplacée perpendiculairement au plan de la cloison séparatrice, de façon à pouvoir pénétrer dans la fente de passage (49) de la cloison (45), et en sortir.

2. Dispositif selon la revendication 1, caractérisé en ce que la bande à raclettes est constituée de rubans de tôle étroits, repliés plusieurs fois en U (32), ayant une hauteur de 15 à 20 mm et qui sont reliés les uns aux autres d'une manière pivotante par des barres (51), la bande à raclettes ayant une largeur telle qu'elle recouvre la totalité du fond de la cuve de décantation, d'un paroi latérale à l'autre.

3. Dispositif selon la revendication 1 ou 2, caractérisé en ce que la vitesse de marche de la bande à raclettes peut être réglée en continu, et que la bande à raclettes court sur des rouleaux (14, 15 et 16), qui sont stockés dans un bâti portant (13), pouvant être extrait.

4. Dispositif selon les revendications 1 à 3, caractérisé en ce que les rouleaux du bâti (13) sont disposés de façon que la bande à raclettes (19) sorte du liquide de la cuve de décantation et sur une arête de décharge (34), au niveau de laquelle les sédiments, contenus dans les cellules (25) de la bande à raclettes, s'échappent et tombent sur une paroi inclinée (35), puis de là sur une autre paroi inclinée (36) et enfin dans le réservoir (37).

5. Dispositif selon les revendications 1 à 4, caractérisé en ce que le réservoir récepteur des sédiments du type boues est un récipient en matière plastique (37), qui lui-même n'a pas de fond, mais qui se trouve sur un bâti à roulettes (38), qui comporte un fond perforé ou perméable à l'eau.

6. Dispositif selon la revendication 5, caractérisé en ce que le matériau absorbant (39) se présente, sous la forme d'une laine de bois, de paille ou analogues, en balles sur le fond du bâti à roulettes (38), et que le réservoir en plastique (37) peut être retiré de ses balles.

7. Dispositif selon les revendications 5 et 6, caractérisé en ce que l'évacuation de l'eau purifiée s'effectue dans un réservoir (40), qui comporte un fond perforé ou percé, et est rempli d'un matériau filtrant, comme la laine de bois ou la paille, sous forme de balles, ce réservoir se trouvant au-dessus d'un réservoir collecteur de liquide (41), lequel, pour sa part, est lui aussi disposé sur un bâti à roulettes et est pourvu d'un raccordement pour l'évacuation du liquide.

## Claims

1. Apparatus for treating used emulsions, solutions, industrial waste waters or the like, comprising reaction tanks and settling tanks with an endlessly circulating scraper belt, which feeds the sedimenting flocculated-out substances over an inclined surface to an outlet opening and comprising devices for receiving the sediment, characterized in that a partition wall (45) is provided in the reaction tank (1), which (partition wall) is furnished with a vertical slit (49), which corresponds in its contour to a mixing turbine (7) and that the mixing turbine (7) can be traversed perpendicularly to the plane of the partition wall and can thus be moved into and out of the slit (49) of the partition wall (45).

2. Apparatus according to Claim 1, characterized in that the scraper belt is composed of slender sheet metal strips bent to U-shape (32) several times, which have a height of 15 to 20 mm and are pivotally connected to one another by rods (51) and the scraper belt has a width such that it covers the entire floor of the settling tank from side wall to side wall.

3. Apparatus according to Claims 1 and 2, characterized in that the speed of circulation of the scraper belt can be infinitely adjusted and the scraper belt runs on rollers (14, 15 and 16), which are journalled in a removable support frame (13).

4. Apparatus according to Claims 1 to 3, characterized in that the rollers of the frame (13) are so arranged that the scraper belt (19) runs out of the liquid of the settling tank and over a discharge edge (34), at which the sediment contained in the cells (25) of the scraper belt falls out and onto an inclined wall (35), and from this wall in turn onto an inclined wall (36) and finally into the tank (37).

5. Apparatus according to Claims 1 to 4, characterized in that the receiving tank for the sludge-like sediment is a plastics tank (37), which itself does not possess any bottom, but which stands on a roller frame (38) which possesses a perforated or water-permeable bottom.

6. Apparatus according to Claim 5, characterized in that the collecting material (39) in the form of wood wool, straw or similar material lies in the form of a bale on the bottom of the roller frame (38) and the plastics tank (37) can be pulled from this bale.

7. Apparatus according to Claims 5 and 6, characterized in that the discharge of the purified water takes place into a tank (40), which possesses a perforated or punctured bottom and is filled with a filter material, such as straw or wood wool in bale form, and that this tank is above a liquid collecting tank (41), which in turn is disposed on a roller frame and is provided with a liquid outlet connection.

Fig. 1

Fig.2

Fig. 3

# Fig. 4

Fig 5

Fig.6

FIG. 7